# EUROPÄISCHE PATENTANMELDUNG

(11) **EP 1 795 428 A1**
(43) Veröffentlichungstag der Anmeldung: **13.06.2007**
(21) Anmeldenummer: 05027133.7
(22) Anmeldetag: 12.12.2005
(51) Int. Cl.: B62D 1/19

(54) **Energie absorbierende mit fliessfähigem Medium operierende Vorrichtung**

(71) Anmelder: Inventus Engineering GmbH, 6771 St. Anton/Montafon (AT)
(72) Erfinder: Battlogg, Stefan, 6771 St. Anton/Montafon (AT); Pösel, Jürgen, 6700 Bludenz (AT)
(74) Vertreter: Hofinger, Stephan

(57) **Zusammenfassung**

Eine Energie absorbierende Vorrichtung, insbesondere für den einmaligen Insassenschutz in Fahrzeugen enthält ein fließfähiges Medium, das bei einem Aufprall durch mindestens eine eine Gegenkraft bestimmende Öffnung (4) gedrückt wird. Die dffnung ist einer Einrichtung (2) zur Regelung der Gegenkraft zugeordnet.

## Beschreibung

Die Erfindung betrifft eine Energie absorbierende Vorrichtung, insbesondere für den einmaligen Insassenschutz in Fahrzeugen, mit einem fließfähigen Medium, das bei einem Aufprall durch mindestens eine eine Gegenkraft bestimmende Öffnung gedrückt wird.

Eine derartige Vorrichtung, eingebaut in eine Lenksäule eins Kraftfahrzeuges, ist beispielsweise aus der US 5,870,930 bekannt. Die Lenksäule weist teleskopisch ineinander schiebbare Teile auf, wobei ein Teil mit einem ringförmigen "Behälter versehen ist, in den eine geeignete Flüssigkeit, beispielsweise ein fließfähiges Silikon, eingefüllt ist. Am zweiten Teil ist eine Manschette fixiert, die nach Art eines Kolbens in den Behälter eintaucht und die Flüssigkeit bei einem Aufprall durch einen Kranz von kleinen Öffnungen auspresst. Die Öffnungen sind von einem ringförmigen Berstelement überdeckt.

Aufprallenergie absorbierende Vorrichtungen sind in Fahrzeugen nicht nur an der Lenksäule, sondern auch an einer Reihe von anderen Bauteilen von Vorteil bzw. notwendig, beispielsweise an Kopfstützen, Sicherheitsgurten, Sitzen und Sitzelementen, usw. Im Extremfall lassen sich in einem Kraftfahrzeug mehr als 20 unterschiedliche Einbauorte finden.

Für den Zusammenstoß relevante Komponenten an Sicherheitsgurten, Airbags usw. sind zurzeit meist einstufig auslösbar, maximal zweistufig. Eine mehrstufige Auslösung ist extrem aufwändig, eine variable Auslösung bisher unmöglich.

Beispielsweise sollte die Lenksäule einen Großteil der Aufprallenergie des Fahrers aufnehmen, also steif ausgeführt werden, wobei die Gegenkraft ca. 8000 N betragen sollte. Ist der Fahrer angegurtet und leicht, genügt eine Gegenkraft von 2000 N. Die viel zu hohe Gegenkraft von 8000 N kann bei leichten und angegurteten Fahrern zu schweren bis tödlichen Verletzungen führen. Ist die Lenkungsgegenkraft aber auf 2000 N eingestellt, würde ein nicht angegurteter Fahrer zu langsam verzögert und mit hoher Restenergie auf den Endanschlag der Lenksäulenverschiebung gedrückt. Da auch hier schwere Verletzungen die Folge sind, wurde versucht, den Airbag und den Sicherheitsgurt zu optimieren, sodass diese Kombination den Großteil der Aufprallenergie des Fahrers absorbiert und nur mehr geringe Restenergie für die Lenksäule übrig lässt, sodass eine kleine Gegenkraft genügt. Allerdings ist dadurch das Problem einer variablen Anpassung nicht gelöst, sondern nur teilverlagert.

Bezogen auf die Verzögerungswerte des Fahrerkörpers ist dies nachteilig, da wertvoller Weg verschenkt wird. Man kann den Aufprall in zwei Wegstrecken unterteilen, nämlich in einen ersten Verzögerungsweg während der Airbag- und Gurtfunktion, der im Durchschnitt etwa 40 cm beträgt, und in einen anschließenden zweiten Verzögerungsweg während der Lenksäulenfunktion, der etwa 10 cm beträgt. Der Körper muss somit im ersten Verzögerungsweg stark verzögert werden, damit die Restenergie bei der Übergabe an den zweiten Verzögerungsweg gering ist. Die Verzögerung ist umgekehrt proportional zum Weg, d.h. der geringe zweite Verzögerungsweg bedeutet eine hohe Verzögerung. Da aber im zweiten Weg nur niedere Gegenkräfte zur Verfügung stehen sollen, um leichte Fahrer nicht zu gefährden, wird eine hohe Verzögerung im ersten Weg in Kauf genommen, sodass der Körper während des ersten Weges stark und bei kleinen und leichten Personen übermäßig stark belastet wird. Die angegebene durchschnittliche Wegstrecke von 40 cm für den ersten Verzögerungsweg bezieht sich auf einen mittelgroßen Fahrer. Bei kleinen Personen, die wesentlich näher am Lenkrad sitzen, ist der erste Verzögerungsweg wesentlich kürzer und etwa 25 cm. Der Anteil des zweiten Verzögerungsweges am Gesamtverzögerungsweg vergrößert sich so auf etwa ein Drittel, ohne dass die auf leichte Fahrer eingestellte Gegenkraft verändert werden kann. Die auf schwere Personen ausgelegte Verzögerung im ersten Verzögerungsweg muss daher noch größer werden und ist teilweise sogar so stark, dass der Körper zurückgeschleudert wird. Bei manchen Fahrzeugen kann daher der Airbag für leichte und kleine Fahrer abgeschaltet werden, wobei dann allerdings der Lenkung die erhöhte Gegenkraftfunktion zukommt.

Sinnvoll und effektiv ist es, den Gesamtweg zu nützen (insgesamt ca. 50 cm) und in der Wegstreckensumme immer adäquat zu verzögern. Nur dies führt zu geringeren Belastungen für den Körper. Da dies nur mit einem regelbaren System möglich ist, hat es sich die Erfindung zur Aufgabe gestellt, eine Vorrichtung der eingangs genannten Art mit einem steuerbaren Energieabsorber zu versehen, sodass die Energieabsorption nicht nur in Abhängigkeit von der Fahrzeugverzögerung, dem Aufprallwinkel, der Masse des Fahrers, usw. variabel eingestellt, sondern auch während des Aufpralls verändert werden kann.

Erfindungsgemäß wird dies durch eine Einrichtung zur Regelung der Gegenkraft erreicht.

Für die Regelung der an der Öffnung vorzusehenden Gegenkraft bieten sich verschiedene Möglichkeiten an. Zum einen ist es denkbar, den Öffnungsquerschnitt zu ändern, beispielsweise durch Unterteilung der Öffnung in mehrere Kanäle, die einzeln gesperrt werden können, durch verstellbare Schieber, Blenden, usw. oder durch mindestens ein Ventil mit mehreren Öffnungsstellungen.

Weiters ist es möglich, die Austrittsmenge pro Zeiteinheit zu variieren, beispielsweise durch Behälter mit über die Länge variierender Querschnittsfläche, sodass die ausgedrückte Menge pro Weg- bzw. Zeiteinheit schwankt.

Schließlich kann die Fließfähigkeit des Mediums beeinflusst werden, vor allem, wenn eine Flüssigkeit verwendet wird, die unter dem Einfluss eines elektrischen oder magnetischen Feldes ihre Viskosität ändert. Die Änderung der Fließfähigkeit ist von großer Bedeutung, da die Energieabsorption an unterschiedliche Ausgangszustände und Bedingungen angepasst werden kann und keine mechanisch beweglichen Teile notwendig sind. Es werden daher in den letzten Jahren Elemente mit geschlossenen Koiben-Zylinder-Systemen, in denen eine unter dem Einfluss eines elektrischen oder magnetischen Feldes die Viskosität ändernde Flüssigkeit durch Überströmöffnungen im Kolben oder im Zylinder hin- und herströmen kann, vermehrt als Stoßdämpfer od. dgl. eingesetzt. Da weder Dichtungen ihre Dichteigenschaften noch bewegliche Teile ihre Gängigkeit schlagartig verlieren, sind Abnützungen an den geschlossenen Kolben-Zylinder-Systemen rechtzeitig erkennbar. Hierin unterscheiden sich Stoßdämpfer, die in ständigem Gebrauch sind, von Aufprall dämpfenden Vorrichtungen, die nur für einen einmaligen Gebrauch in einem Notfall vorgesehen sind und in den meisten Fallen überhaupt nicht zum Einsatz kommen.

Da vor allem magnetorheologische Flüssigkeiten besonders geeignet sind, weil im Gegensatz zu elektrorheologischen Flüssigkeiten relativ wenig Energie für den Aufbau bzw. die Änderung des Feldes zugeführt werden muss, ist in einer bevorzugten Ausführung vorgesehen, dass das Medium eine magnetorheologische Flüssigkeit ist, und die Gegenkraft an der Öffnung durch ein veränderbares Magnetfeld regelbar ist.

Die Öffnung ist bevorzugt rechteckig und durch die Seitenwände des Behälters begrenzt, wobei die längeren Rechteckseiten bildenden Seitenwände zur Öffnung konvergieren, sodass ein schmaler Schlitz gebildet ist. An diesen schließt bevorzugt ein Austrittskanal gleichen Querschnitts an, der durch den Spalt zwischen zwei Magnetpole bildenden Eisenteilen einer das veränderbare Magnetfeld erzeugenden Einrichtung geführt ist. Um den Abstand zwischen den beiden Polen zu minimieren, können die beiden breiten Wände des Austrittskanals im Bereich der Eisenteile unterbrochen sein, sodass das Medium direkt mit den Polflächen in Berührung kommt.

Die beiden Eisenteile können permanentmagnetisch sein, wobei ihr Magnetfeld durch das Magnetfeld einer ansteuerbaren Spule verstärkt oder abgeschwächt, gegebenenfalls auch deaktiviert werden kann.

In einer anderen Ausführung können die beiden Eisenteile über eine ansteuerbare Spule magnetisierbar sein, um die Gegenkraft von einem unteren Grenzwert zu erhöhen. Dieser kann beispielsweise von der Viskosität des unmagnetisierten Mediums und einem insbesondere in der Ausführung die Öffnung abdeckenden Berstelement abhängig sein, das bei einem bestimmten Druck des Mediums die Öffnung freigibt.

Für die Stromversorgung ist insbesondere ein Kondensator vorgesehen; es sind aber auch andere geeignete Stromquellen denkbar, die am Verwendungsort zur Verfügung stehen.

Nachstehend wird nun die Erfindung anhand der Figuren der beiliegenden Zeichnungen näher beschrieben, ohne darauf beschränkt zu sein. Es zeigen:
- Fig. 1: einen schematischen Ausschnitt aus einer Lenksäule mit einer erfindungsgemäßen Vorrichtung,
- Fig. 2: einen Längsschnitt durch einen Behälter der erfindungsgemäßen Vorrichtung.
- Fig. 3: eine schematische Schrägansicht einer erfindungsgemäßen Vorrichtung,
- Fig. 4: eine Stirnansicht der Vorrichtung nach Fig. 3 mit Magnetfeldverlauf,
- Fig. 5: einen Teilschnitt durch eine bevorzugte Ausführung der Vorrichtung,
- Fig. 6 und 7: zwei Schaltbilder zur Beschleunigung des Magnetfeldaufbaus,
- Fig. 8 und 9: einen Behälter für einen progressiven Gegenkraftverlauf,
- Fig. 10 und 11: einen Behälter für einen degressiven Gegenkraftverlauf,
- Fig. 12 und 13: einen Behälter für einen variablen Gegenkraftverlauf und
- Fig. 14: eine schematische Darstellung der erfindungsgemäßen Vorrichtung als Teil einer Kopfstütze.

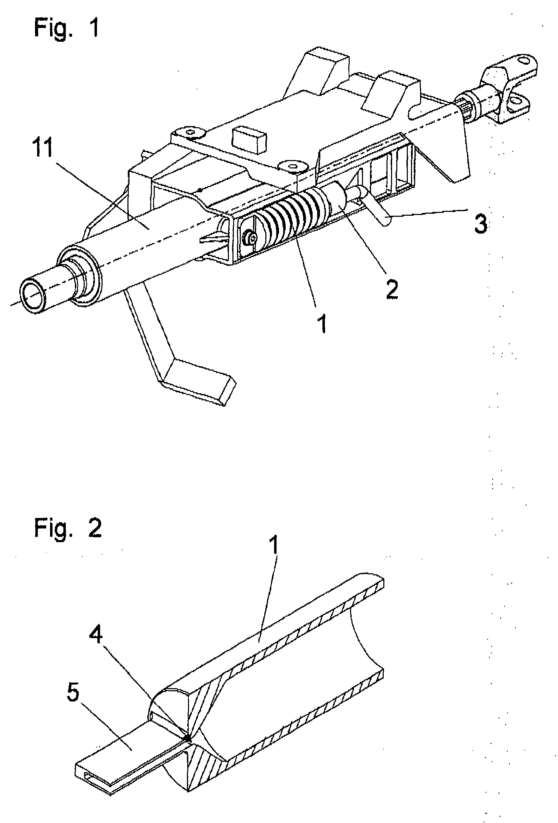

Eine Energie absorbierende Vorrichtung kann, wie Fig. 1 zeigt, beispielsweise an einer Lenksäule 11 parallel zu deren bei einem Zusammenstoß längenverschiebbaren Teilen vorgesehen sein. Die Vorrichtung weist einen Behälter 1 auf, dessen Volumen verkleinerbar ist und in dem eine Flüssigkeit enthalten ist. Der Behälter 1 ist an einem Ende an einem verschiebbaren Teil der Lenksäule 11 fixiert, während das andere Ende, an das eine Abflussleitung 3 anschließt, an einem nicht verschiebbaren Teil der Lenksäule 11 ansteht oder fixiert ist. Bei einem Aufprall kann sich die Lenksäule 11 verkürzen und die im Behälter 1 enthaltene Flüssigkeit wird durch eine Öffnung und einen anschließenden Austrittskanal in die Abflussleitung 3 ausgedrückt, wobei am Übergang in den Austrittskanal 5 eine Gegenkraft erzeugt wird, die das Auspressen der Flüssigkeit verzögert, sodass Aufprallenergie absorbiert wird.

Gemäß Fig. 1 ist der Behälter 1 mit einer magnetorheologischen Flüssigkeit gefüllt und der Austrittskanal 5 von einer Einrichtung 2 zur Erzeugung eines veränderbaren Magnetfeldes umgeben. Die Einrichtung 2 umfasst einen Elektromagneten, über den ein Magnetfeld erzeugt oder das Magnetfeld eines Permanentmagneten beeinflusst wird. Der Elektromagnet kann über Signale von Sensoren, die einen Aufprall überwachen, in Abhängigkeit von verschiedenen Kriterien, wie Gewicht und Sitzposition des Fahrers usw., angesteuert werden, wobei das veränderliche Magnetfeld die Viskosität der durch die Öffnung zu drückenden magnetorheologischen Flüssigkeit verändert, und die Gegenkraft größer oder kleiner wird.

In Fig. 2 sind Details besser erkennbar. Der Behälter 1 verjüngt sich zu einer rechteckigen flachen Öffnung 4, an den der in die Abflussleitung 3 mündende Austrittskanal 5 anschließt. Die Wände des Austrittskanals 5 sind vorzugsweise aus nichtmagnetischem Material.

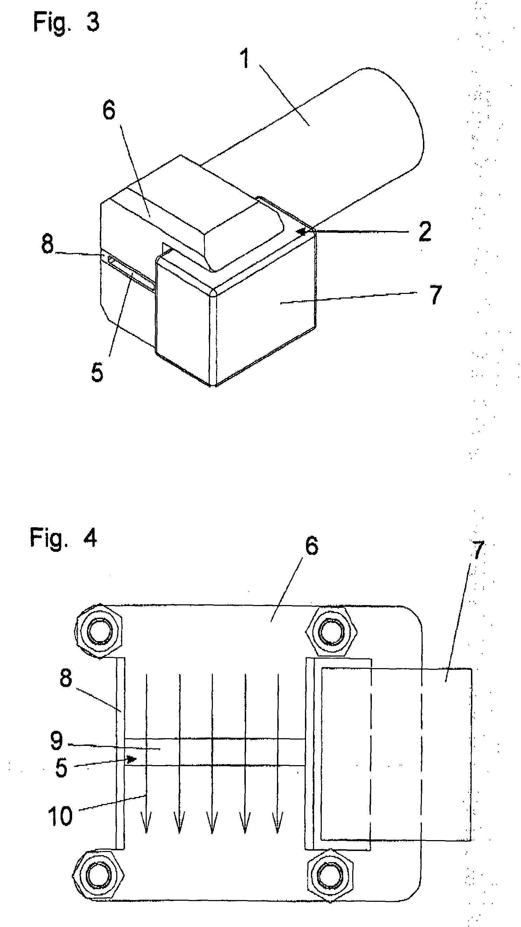

Fig. 3 und 4 zeigen den Aufbau der Einrichtung 2 zur Erzeugung des veränderbaren Magnetfeldes 10 mit C-förmigen Eisenelementen 6, denen eine Spule 7 zugeordnet ist. Der Austrittskanal 5 durchsetzt den Spalt 9 zwischen der Polfläche der Eisenelemente 6. Wie Fig. 4 zeigt, können die beiden breiten Wände des Austrittskanals an den Eisenelementen 6 ausgenommen sein, sodass nur die schmalen Wände 8 vorhanden sind. Der Spalt 9 ist dadurch minimiert, und die magnetorheologische Flüssigkeit ist in direktem Kontakt mit den Polflächen.

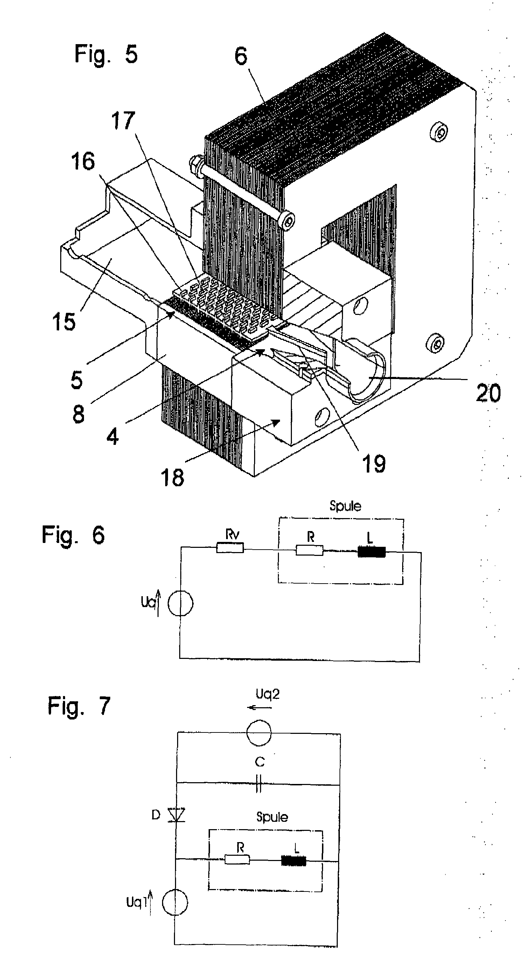

Fig. 5 zeigt konstruktive Details einer erfindungsgemäßen Vorrichtung im Teilschnitt. Der durch die Eisenelemente 6 führende Austrittskanal 5 ist durch eine Trennplatte 16 unterteilt, von der nach beiden Seiten Stege 17 hoch stehen. Die Verweilzeit des Mediums im Austrittskanal 5 wird durch die Einbauteile 16, 17 verlängert, sodass das Medium länger dem Magnetfeld ausgesetzt ist, ohne dass der Elektromagnet größer gemacht werden muss. Die Verweilzeit sollte zumindest eine Millisekunde, bevorzugt zumindest eineinhalb Millisekunden betragen, um auch bei Kraftspitzen, die extrem hohe Strömungsgeschwindigkeiten durch den Austrittskanal 5 bewirken, eine ausreichende Magnetisierung zu erzielen. Weitere Möglichkeiten für die Verlängerung der Verweilzeit sind die Ausbildung von Unebenheiten in den Begrenzungswänden 8 des Austrittskanales 5, alternierend in den Spalt 9 vorstehende bzw. rückspringende Stirnflächen der Eisenelemente 6, oder eine ein- oder mehrmalige Umlenkung des gesamten Austrittskanales 5, beispielsweise in Art von Schikanen.

In Fig. 5 ist anstelle der Abflussleitung ein Auffangbehälter 15 am Ende des Austrittskanales 5 vorgesehen. Die in den Austrittskanal 5 mündende Öffnung 4 ist in dieser Ausführung an einem insbesondere zweiteiligen Behälterkopf 18 ausgebildet, der mit zur Öffnung 4 konvergierenden Leitstegen 19 für die gleichmäßige Verteilung und Einleitung des Mediums versehen ist. Der Behälterkopf 18 weist einen Gewindestutzen 20 auf, auf den der Behälter 1 mit einem entsprechenden Gewinde aufgeschraubt werden kann.

Ist das Magnetfeld anfangs eingeschaltet, dann addiert sich die höhere Gegenkraft zu den Trägheitskräften der Komponenten und den Schlag-/Stosskräften, wodurch es eine hohe Gegenkraftspitze gibt. Besser ist es deshalb, wenn das Magnetfeld so lange ausgeschalten ist, bis die erste Lastspitze vorbei ist und alle Komponeneten beschleunigt sind. Erst danach (nach ca. 3 ms) sollte das Magnetfeld sehr rasch aufgebaut werden (im Bereich von ca. 10 ms). Dadurch kann die Gegerikraftkurve noch besser an die Gegebenheiten angepasst werden und während des Durchströmens des Mediums durch den Austrittskanal 5 geregelt werden, zum Beispiel in Anpassung an eine Fahrerpositionserkennung, einer Fahrergewichtserkennung, einer Beschleunigungsmessung, und so weiter.

Um das Magnetfeld rasch aufzubauen, gibt es zum Beispiel die in Fig. 6 und 7 gezeigten Schaltungen. Da die Zeitkonstante UR, nach der ca. 63% des Magnetfeldes aufgebaut sind, umso kleiner wird, je größer der Widerstand R ist, kann gemäß Fig. 6 der rasche Aufbau des Magnetfeldes durch einen in Serie zur Spule der Einrichtung 2 geschalteten Vorwiderstand Rv erreicht werden, der dann überbrückt oder ausgeschaltet wird.

Fig. 7 zeigt eine Möglichkeit, in der ein Kondensator C von einer separaten, zweiten Spannungsquelle Uq2 geladen wird und zusammen mit einer Diode D eine im ersten Moment hohe Spannung an die Spule der Einrichtung 2 weitergibt. Die kurze Spannungsspitze beträgt etwa das 2- bis 3-fache der von der ersten Spannungsquelle Uq1 gelieferten Spannung, mit der das Magnetfeld anschließend in der gewünschten Größe gehalten wird.

Fig. 1 und 2 zeigen zylindrische Behälter 1, der nach Fig. 1 in Art eines Faltenbalges ausgebildet und daher komprimierbar ist, und der nach Fig. 2 einen Kolben enthalten kann, um die Flüssigkeit auszudrücken. Da die Querschnittsfläche des Behälters über die Länge im Wesentlichen konstant ist, ist auch die Gegenkraft an der Öffnung 4 gleichbleibend, da pro Weg- oder Zeiteinheit dieselbe Menge durchgedrückt wird.

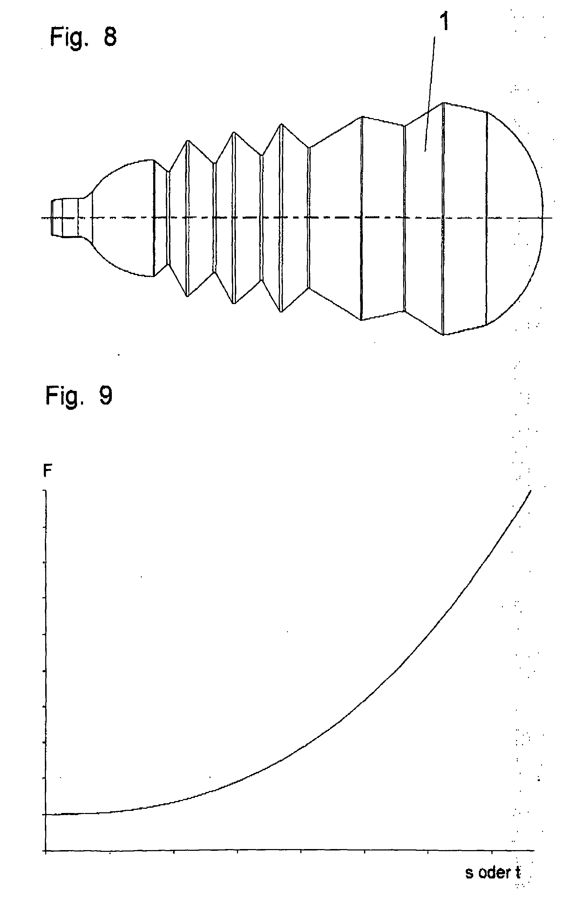

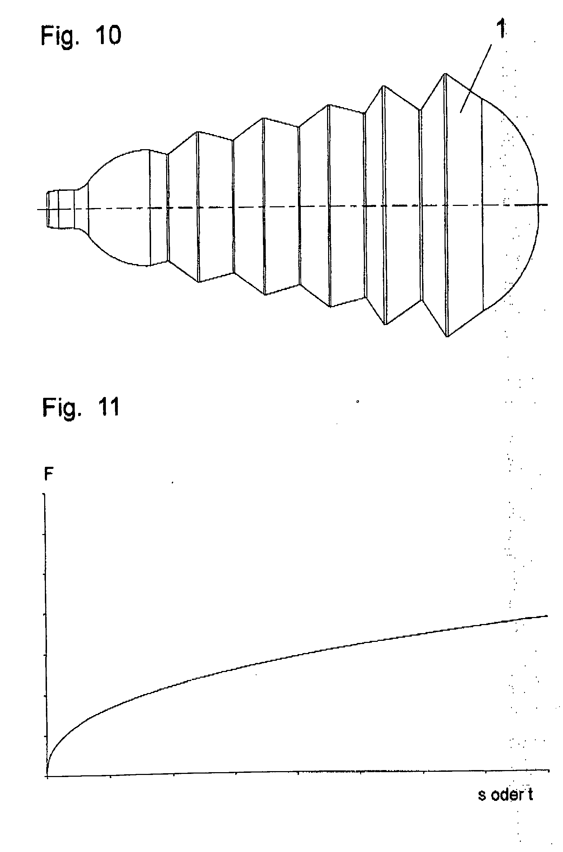

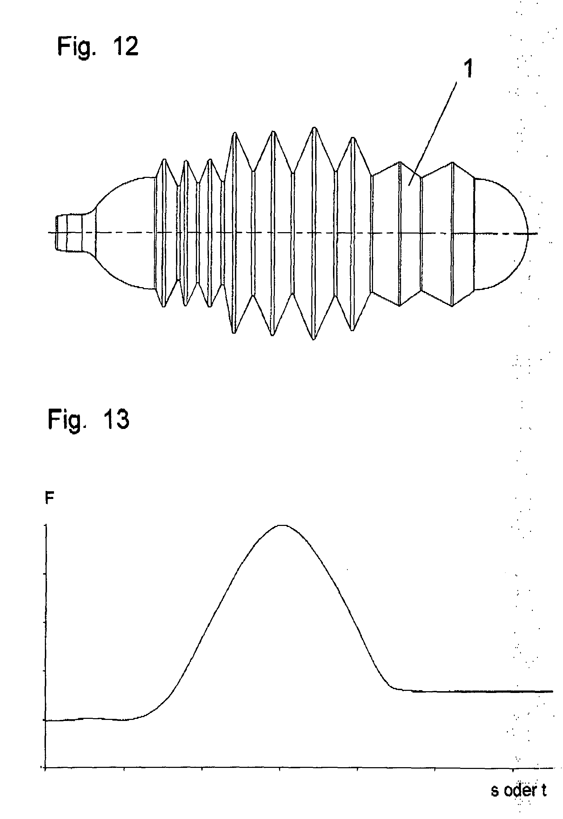

Fig. 8, 10 und 12 zeigen Alternativen, bei denen ohne Beeinflussung an der Öffnung die Gegenkraft progressiv, degressiv oder schwankend erzeugt wird. Fig. 8 zeigt einen komprimierbaren Behälter 1, dessen Querschnitt sich von der Öffnung 4 weg immer mehr vergrößert, so dass, wie Fig. 9 zeigt, die Gegenkraft immer stärker wird. Fig. 10 zeigt einen komprimierbaren Behälter 1, dessen Querschnitt sich von der Öffnung weg zuerst mehr, dann geringer vergrößert, sodass die Gegenkraft (Fig. 11) anfangs stärker und später weniger zunimmt. Fig. 12 zeigt schließlich einen komprimierbaren Behälter 1, dessen Querschnitt in der Mitte am größten ist, sodass die Gegenkraft ansteigt und wieder abnimmt (Fig. 13).

Die Ausführungen der Fig. 8 bis 13 zeigen, dass die Gegenkraft der Öffnung 4 durch eine entsprechende Behälterform gewählt werden kann, sodass eine Regeleinrichtung an der Öffnung nicht erforderlich ist, um eine variable Gegenkraft zu erzeugen. Unterschiedliche Aufpralldämpfungswerte können bereits durch die dazupassende Behälterform erreicht werden. Die Regeleinrichtung 2 an der Öffnung 4 ermöglicht aber eine Variierbarkeit der Gegenkraft in Abhängigkeit von verschiedenen Kriterien.

Kommt es zu einem Unfall, so wird durch den Aufprall des Oberkörpers auf das Lenkrad das Volumen des Behälters verringert und die Einrichtung 2 regelt den Durchfluss des Mediums durch den Austrittskanal 5 durch eine entsprechende Änderung der Viskosität in Abhängigkeit von Signalen eines Rechners, der verschiedene Messdaten und Parameter verarbeitet. Bei Nichtgebrauch ist der Elektromagnet stromlos und das enthaltene Medium leichtflüssig. Ein versehentliches Ausfließen des Mediums verhindert ein die Öffnung 4 überdeckendes Berstelement, das bei einem bestimmten Druck bricht. Der Elektromagnet wird daher nur im Unglücksfall erregt, um die Viskosität des magnetorheologischen Mediums zu erhöhen und zu verringern.

Bei der Verwendung magnetorheologischer Flüssigkeiten ist als Stromquelle ein beispielsweise im Bereich des Lenkrades untergebrachter Kondensator ausreichend, sodass das System auch bei Ausfall der Stromversorgung des Kraftfahrzeuges funktionsfähig bleibt. Fallen die Stromversorgung oder die Elektronik vollständig aus, so wirkt in jedem Fall die durch die Öffnung allein bestimmte Gegenkraft, die beispielsweise eine Größe von 2000 N aufweist.

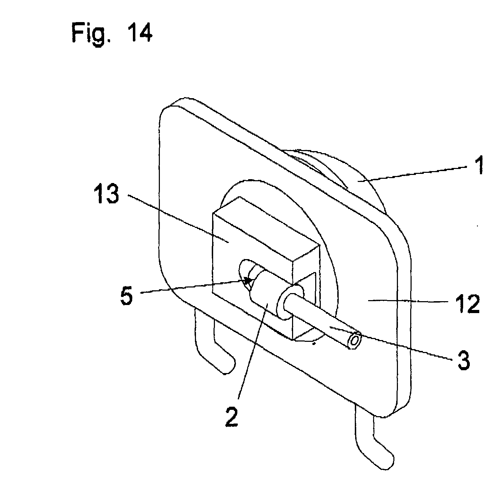

Fig. 14 zeigt schematisch eine aufpralldämpfende Kopfstütze 12. Der Behälter 1 ist hier nicht länger zylindrisch, sondern eher in Form einer flacheren Dose, die ebenfalls zusammengedrückt werden kann, wenn der Kopf einer Person auf die Kopfstütze 12 schlägt. Der Austrittskanal 5 ist abgewinkelt und wiederum von der Einrichtung 2 umschlossen. 13 beziffert eine Elektronik, über die die Einrichtung angesteuert wird.

## Patentansprüche

1. Energie absorbierende Vorrichtung, insbesondere für den einmaligen Insassenschutz in Fahrzeugen, mit einem fließfähigen Medium, das bei einem Aufprall durch mindestens eine eine Gegenkraft bestimmende Öffnung (4) gedrückt wird, **gekennzeichnet durch** eine Einrichtung (2) zur Regelung der Gegenkraft.

2. Vorrichtung nach Anspruch 1, **dadurch gekennzeichnet, dass** das Medium eine magnetorheologische Flüssigkeit ist, und die Gegenkraft im Bereich der Öffnung (4) durch ein veränderbares Magnetfeld (10) regelbar ist.

3. Vorrichtung nach Anspruch 1 oder 2, **dadurch gekennzeichnet, dass** das Medium in einem Behälter (1) enthalten ist, dessen Seitenwände die Öffnung (4) begrenzen.

4. Vorrichtung nach Anspruch 3, **dadurch gekennzeichnet, dass** die Öffnung (4) rechteckig ist.

5. Vorrichtung nach Anspruch 4, **dadurch gekennzeichnet, dass** die die langen Rechteckseiten bildenden Seitenwände zur Öffnung (4) hin konvergieren.

6. Vorrichtung nach einem der Ansprüche 1 bis 5, **dadurch gekennzeichnet, dass** die Öffnung (4) durch einen Berstkörper abgedeckt ist.

7. Vorrichtung nach einem der Ansprüche 3 bis 6, **dadurch gekennzeichnet, dass** der Behälter (1) einen Austrittskanal (5) aufweist, der an die Öffnung (4) anschließt, und dem eine das veränderbare Magnetfeld erzeugende Einrichtung (6, 7) zugeordnet ist.

8. Vorrichtung nach Anspruch 7, **dadurch gekennzeichnet, dass** der Austrittskanal (5) Wände (8) aus nichtmagnetischem Material aufweist.

9. Vorrichtung nach Anspruch 7 oder 8, **dadurch gekennzeichnet, dass** der Austrittskanal (5) durch den Spalt (9) zwischen zwei Magnetpole bildenden Eisenteilen (6) geführt ist.

10. Vorrichtung nach Anspruch 9 und 10, **dadurch gekennzeichnet, dass** die beiden breiten Wände des Austrittskanals (5) im Bereich der Eisenteile (6) unterbrochen sind.

11. Vorrichtung nach einem der Ansprüche 7 bis 10, **dadurch gekennzeichnet, dass** der Austrittskanal (5) die Gegenkraft erhöhende Einbauten (16, 17) aufweist.

12. Vorrichtung nach einem der Ansprüche 2 bis 11, **dadurch gekennzeichnet, dass** die das veränderbare Magnetfeld (10) erzeugende Einrichtung (6, 7) Permanentmagneten umfasst und ein steuerbarer Elektromagnet zur Änderung ihres Magnetfeldes vorgesehen ist.

13. Vorrichtung nach einem der Ansprüche 1 bis 8, **dadurch gekennzeichnet, dass** die das veränderbare Magnetfeld (10) erzeugende Einrichtung (6, 7) zumindest einen steuerbaren Elektromagneten umfasst.

14. Vorrichtung nach Anspruch 12 oder 13, **dadurch gekennzeichnet, dass** als Energiequelle für den Elektromagneten zumindest ein Kondensator vorgesehen ist.

15. Vorrichtung nach einem der Ansprüche 1 bis 14, **dadurch gekennzeichnet, dass** ein Steuerungselektronik (13) und mindestens ein Sensor vorgesehen ist.

16. Lenksäule mit einer Energie absorbierenden Vorrichtung nach einem der Ansprüche 1 bis 15.

17. Kopfstütze mit einer Energie absorbierenden Vorrichtung nach einem der Ansprüche 1 bis 15.

18. Stoßfängeraufhängung mit einer Energie absorbierenden Vorrichtung, nach einem der Ansprüche 1 bis 15.
